# EUROPÄISCHE PATENTSCHRIFT

(11) **EP 4 103 412 B1**
(45) Veröffentlichungstag und Bekanntmachung des Hinweises auf die Patenterteilung: **21.01.2026**
(21) Anmeldenummer: 20816970.6
(22) Anmeldetag: 30.11.2020
(51) Int. Cl.: B60C 5/00, B60C 19/00

(54) **FAHRZEUGLUFTREIFEN MIT GERÄUSCHABSORBER UND VERFAHREN ZUR DETEKTION EINES FAHRZEUGLUFTREIFENS MIT GERÄUSCHABSORBER SOWIE ZUM RECYCLING EINES FAHRZEUGLUFTREIFENS MIT GERÄUSCHABSORBER**
PNEUMATIC VEHICLE TIRE WITH NOISE ABSORBER, AND METHOD FOR DETECTING A PNEUMATIC VEHICLE TIRE WITH NOISE ABSORBER AND FOR RECYCLING A PNEUMATIC VEHICLE TIRE WITH NOISE ABSORBER
PNEUMATIQUE DE VÉHICULE AVEC ABSORBEUR DE BRUIT ET PROCÉDÉ DE DÉTECTION D'UN PNEUMATIQUE DE VÉHICULE AVEC ABSORBEUR DE BRUIT ET DE RECYCLAGE D'UN PNEUMATIQUE DE VÉHICULE AVEC ABSORBEUR DE BRUIT

(30) Priorität: 10.02.2020 DE 102020201582
(43) Veröffentlichungstag der Anmeldung: 21.12.2022
(73) Patentinhaber: Continental Reifen Deutschland GmbH, 30175 Hannover (DE)
(72) Erfinder: DOROSHENKO, Mikheil, 30165 Hannover (DE); KUNZE, Christian, 30165 Hannover (DE)
(74) Vertreter: Continental Corporation
(86) Internationale Anmeldenummer: PCT/EP2020/083934
(87) Internationale Veröffentlichungsnummer: WO 2021/160313

(56) Entgegenhaltungen:
- EP-A2- 1 795 377
- DE-A1- 102016 214 496
- JP-A- 2012 254 655

## Beschreibung

Die Erfindung betrifft einen Fahrzeugluftreifen mit wenigstens einem in seinem Inneren an der dem Laufstreifen gegenüberliegenden Innenfläche haftend angebrachten Geräuschabsorber. Die Erfindung betrifft ferner ein Verfahren zur Detektion eines Fahrzeugluftreifens mit Geräuschabsorber sowie ein Verfahren zum Recycling eines Fahrzeugluftreifens mit Geräuschabsorber.

Es ist bekannt Fahrzeugluftreifen mit Geräuschabsorbern auszustatten, um das Fahrgeräusch zu reduzieren. Meist ist der Geräuschabsorber in Form eines Schaumstoffrings ausgeführt, der die Luftschwingung im Reifen reduziert und somit zu einer Verbesserung des Geräuschverhaltens im Fahrzeug führt. Der Schaumstoffring kann aus offenzelligem Schaumstoff bestehen und wird auch als "Innenabsorber" bezeichnet. Der Geräuschabsorber ist beispielsweise ein Polyurethan-Schaumstoffring und somit aus anderen Materialien als die sonstigen Reifenbauteile.

EP 1 795 377 A2 betrifft einen Luftreifen mit einem Dämpfungselement, welches mittels einer Schutzfolie vor der Reifenmontage gegen Wasser und UV-Strahlung geschützt ist.

JP 2012-254655 A betrifft einen Luftreifen und dessen Herstellung, wobei zur Geräuschdämpfung an der Reifeninnenseite kurze Fasern mit einem Farbmittel angebracht sind, dessen Farbton sich temperaturabhängig ändern kann, um eine thermische Überbelastung anzuzeigen.

Es können aber auch mehrere Geräuschabsorber angebracht sein, wie in der DE 102017210929 A1 oder EP 1 510 366 A1 offenbart.

Beim Recycling der Fahrzeugluftreifen mit Geräuschabsorber stellt sich das Problem, dass vor der üblichen Zerkleinerung der Reifen eine Materialtrennung wünschenswert ist, also insbesondere der Geräuschabsorber abgetrennt werden sollte.

Dabei kann es je nach optischem Zustand des Geräuschabsorbers - dieser kann eine dunkle Farbe aufweisen und/oder verschmutzt sein - und den Lichtverhältnissen erschwert sein, Fahrzeugluftreifen mit Geräuschabsorber zu erkennen. Dies erschwert wiederum das Unterscheiden und Trennen von Fahrzeugluftreifen mit und ohne Geräuschabsorber, was wiederum das Recycling von Fahrzeugluftreifen vor dem Hintergrund der erwünschten Materialtrennung erschwert oder verlangsamt.

Der vorliegenden Erfindung liegt daher die Aufgabe zugrunde einen Fahrzeugluftreifen, mit wenigstens einem in seinem Inneren an der dem Laufstreifen gegenüberliegenden Innenfläche haftend angebrachten Geräuschabsorber, wobei der Geräuschabsorber eine nach radial einwärts gerichtete Oberfläche aufweist (Fahrzeugluftreifen mit Geräuschabsorber), bereitzustellen, der einfacher als Fahrzeugluftreifen mit Geräuschabsorber erkannt werden kann und somit leichter von Fahrzeugluftreifen ohne Geräuschabsorber unterschieden werden kann.

Gelöst wird die Aufgabe dadurch, dass auf der nach radial einwärts gerichteten Oberfläche des Geräuschabsorbers wenigstens ein Farbmittel wie in Anspruch 1 definiert, aufgebracht ist.

Dadurch dass Fahrzeugluftreifen mit Geräuschabsorber auf der nach radial innen gerichteten Oberfläche des Geräuschabsorber wenigstens ein Farbmittel aufweisen, können die Reifen einfacher von Fahrzeugluftreifen ohne Geräuschabsorber unterschieden werden. Insbesondere kann die Unterscheidung in einem automatisierten Verfahren mit einem Detektor, insbesondere Farbdetektor oder Photodetektor, erfolgen, ohne dass eine individuelle Sichtung des Reifens durch einen Operator notwendig ist.

Ferner kann aber auch ein Operator einen derartigen Reifen mit Geräuschabsorber durch das Farbmittel schneller und eindeutiger erkennen.

Dadurch ist das Recycling von Reifen mit (und ohne) Geräuschabsorber deutlich vereinfacht und erleichtert.

Die Vorgänge der Detektion mittels Detektors und Erkennung durch einen Operator werden im Rahmen der vorliegenden Erfindung beide mit "Detektieren" bezeichnet.

Dadurch, dass lediglich die Oberfläche des Geräuschabsorbers mit einem Farbmittel versehen ist, können die Reifen voneinander unterschieden werden, ohne dass es notwendig ist, den gesamten Geräuschabsorber farbig auszugestalten.

Im Folgenden wird die Erfindung weiter erläutert und weitere vorteilhafte Ausführungsformen beschrieben. Soweit nicht anders angegeben oder technisch nicht machbar, können verschiedene Ausführungsformen auch miteinander kombiniert werden.

Unter dem Ausdruck "nach radial einwärts gerichtete Oberfläche" ist eine Position zu verstehen, die nicht die Oberfläche, mit der der Geräuschabsorber an der Reifeninnenseite haftet ist, sondern insbesondere in Richtung des Reifeninneren, in radialer Richtung vom Laufstreifen weg, auf dem Geräuschabsorber angeordnet ist.

Im Fall von einzelnen Blöcken mehrerer Geräuschabsorber ist jegliche nach innen gerichtete, nicht an dem Reifeninneren anhaftende Fläche gemeint.

Hierbei muss nicht die gesamte nach radial innen gerichtete Oberfläche mit dem Farbmittel bedeckt sein. Gemäß vorteilhafter Ausführungsformen der Erfindung bedeckt das Farbmittel 50 bis 100 %, bevorzugt 80 bis 100 %, insbesondere 90 bis 100 % der nach radial einwärts gerichteten Oberfläche des Geräuschabsorbers.

Je größer der Anteil der Oberfläche ist, der mit dem Farbmittel versehen ist, desto zuverlässiger kann die Detektion erfolgen.

Allerdings sind kleine Lücken nicht nachteilig.

Gemäß vorteilhafter Ausführungsformen ist das Farbmittel umlaufend in Form eines Streifens angeordnet, wobei der Streifen durchgängig oder unterbrochen sein kann. Ein Streifen lässt sich auf einfache und automatisierte Weise umlaufend durchgängig oder abschnittsweise aufbringen.

Das Farbmittel kann prinzipiell jeden Farbton aufweisen, der sich ausreichend von dem Farbton des Geräuschabsorbers unterscheidet.

Das Farbmittel weist gemäß vorteilhafter Ausführungsformen einen farbigen oder weißen Farbton auf, der gut von schwarzen Farbtönen unterscheidbar ist, wie beispielsweise gemäß den RAL-Farbcodes 1000 bis 1037, 2000 bis 2013, 3000 bis 3033, 4000 bis 4012, 5000 bis 5026, 6000 bis 6038, 7000 bis 7048, 8000 bis 8029, 9000 bis 9003, 9010 oder 9016 auf.

Hiermit können insbesondere Reifen mit dunklem oder schwarzem Geräuschabsorber deutlich einfacher und zuverlässiger erkannt werden.

Das Farbmittel ist bevorzugt ausgewählt aus anorganischen und organischen Farbmitteln.

Hierdurch steht ein breites Spektrum an farbgebenden Substanzen zur Verfügung, sodass geeignete Farben über das oder die Farbmittel verwendet werden können, die an den jeweiligen Detektor angepasst sind oder unter den gegebenen Lichtbedingungen besonders gut mittels eines Farbdetektors detektierbar sind.

Auch "weiß" kann mittels eines Farbdetektors detektiert werden.

Gemäß vorteilhafter Ausführungsformen der Erfindung umfasst das Farbmittel wenigstens ein konjugiertes π-Elektronensystem (pi-Elektronensystem). Es gibt zahlreiche derartige organische Farbmittel, sodass auch hier ein geeignetes Farbmittel wählbar ist, welches insbesondere unter den gegebenen Lichtbedingungen besonders gut mittels eines Farbdetektors detektierbar ist.

Zudem können derartige Farbmittel besonders materialsparend eingesetzt werden.

Das oder die Farbmittel werden über eine flüssige Phase, insbesondere als Dispersion oder Lösung, aufgetragen.

Bei dem organischen Farbmittel aufweisend wenigstens ein konjugiertes π-Elektronensystem kann es sich prinzipiell um jedes Molekül handeln, welches bevorzugt aufgrund der Konjugation farbig ist.

Gemäß bevorzugter Ausführungsformen der Erfindung ist das organische Farbmittel ausgewählt aus der Gruppe beispielsweise enthaltend, besonders bevorzugt bestehend aus 1-[(2-chloro-4-nitrophenyl) azo]2-Naphthol (Pigment Rot 4; CAS-Nr.: 2814-77-9), 4,4'-[(3,3'-Dichlor[1,1'-biphenyl]-4,4'-diyl)bis(azo)]bis[2,4-dihydro-5-methyl-2-phenyl-3H-pyrazol-3-on] (Pigment Orange 13; CAS-Nr.: 3520-72-7), 1-amino-2-methyl-9,10-anthracenedione (CAS-Nr.: 82-28-0),
Permanent Violet RL (CAS-Nr.: 6358-30-1),
pigment yellow 155 (CAS-Nr.: 68516-73-4),
disperse blue 1 (CAS-Nr.: 2475-45-8),
Methylorange (CAS-Nr.: 547-58-0).

Bevorzugt wird ein nicht kanzerogen wirkendes und ungiftiges Farbmittel verwendet.

Gemäß vorteilhafter Ausführungsformen der Erfindung umfasst das Farbmittel wenigstens ein Metallatom oder Metallion. Derartige Farbmittel sind besonders stabil und behalten ihre Farbe über einen längeren Zeitraum und werden vergleichsweise langsam ausgewaschen durch Wassereintrag, wie nach Regen.

Bei dem Farbmittel aufweisend wenigstens ein Metallatom oder Metallion kann es sich prinzipiell um jede Substanz handeln, die farbig ist, wie beispielsweise Metall-Komplexe mit organischen Liganden oder anorganischen Pigmenten.

Gemäß bevorzugter Ausführungsformen der Erfindung ist das Farbmittel aufweisend wenigstens ein Metallatom oder Metallion ausgewählt aus der Gruppe beispielsweise enthaltend, besonders bevorzugt bestehend aus
Pigment Blue 27 (CAS-Nr.: 12240-15-2),
Bariumchromat (CAS-Nr.: 10294-40-3),
Aureolin (CAS-Nr.: 13782-01-9),
Ägyptisch Blau (CaCu[Si₄O₁₀], CAS-Nr. 15843-33-1).

Gemäß weiterer vorteilhafter Ausführungsformen umfasst das Farbmittel wenigstens ein Weißpigment, wie insbesondere Kaolin, Titandioxid (TiO₂), Bariumsulfat (BaSO₄), oder Calciumcarbonat (CaCO₃), insbesondere Kreide.

Es ist auch denkbar, dass farbige Kreide verwendet wird.

Im Folgenden werden verschiedene Ausführungsformen beschrieben, wie das Farbmittel auf die Geräuschabsorberoberfläche aufgebracht werden kann. Sämtliche Ausführungsformen sind mit den beschriebenen möglichen Anordnungen und der sich ergebenden Bedeckung der Oberfläche des Geräuschabsorbers kombinierbar.

Gemäß vorteilhafter Ausführungsformen der Erfindung ist das Farbmittel mittels einer Dispersion, insbesondere Suspension oder Emulsion, auf die Oberfläche des Geräuschabsorbers aufgetragen, wobei die Dispersion von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Farbmitteln enthält.

Die Angabe in Gew.-% bezieht sich auf die Gesamtmasse der Dispersion vor dem Trocknen.

In der Dispersion ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Bevorzugt handelt es sich bei der Dispersion um eine Suspension. Das oder die Farbmittel sind gemäß dieser Ausführungsform in einer Flüssigkeit suspendiert.

Die Angabe in Gew.-% bezieht sich auf die Gesamtmasse der Suspension vor dem Trocknen.

Eine Suspension lässt sich einfach und materialsparend auftragen.

Die Flüssigkeit der Suspension kann jede denkbare Flüssigkeit sein, die mit dem jeweiligen Geräuschabsorber kompatibel ist. Gemäß vorteilhafter Ausführungsformen der Erfindung handelt es sich um eine wässrige Suspension, welche besonders umweltfreundlich ist.

Gemäß weiterer vorteilhafter Ausführungsformen der Erfindung ist das Farbmittel mittels einer Lösung auf die Oberfläche des Geräuschabsorbers aufgetragen, wobei die Lösung wenigstens ein Lösungsmittel und von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Farbmitteln enthält.

Die Farbmittel sind gemäß dieser Ausführungsform in einer Flüssigkeit gelöst.

Die Angabe in Gew.-% bezieht sich auf die Gesamtmasse der Lösung vor dem Trocknen.

Auch in der Lösung ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Eine Lösung lässt sich einfach auftragen.

Das oder die Lösungsmittel kann/können jede denkbare Flüssigkeit sein, die mit dem jeweiligen Geräuschabsorber kompatibel ist/sind.

Gemäß vorteilhafter Ausführungsformen der Erfindung handelt es sich um eine wässrige Lösung, welche besonders umweltfreundlich und nicht brennbar ist.

Gemäß weiterer vorteilhafter Ausführungsformen der Erfindung handelt es sich um wenigstens ein organisches Lösungsmittel. Das organische Lösungsmittel kann prinzipiell jedes dem Fachmann bekannte geeignete Lösungsmittel sein, wie Alkohole (Einfach- oder Mehrfachalkohole), Ketone, Ester, Aldehyde, Aromaten, Alkaen wie Hexan, oder Ether, wie Petrolether.

Das organische Lösungsmittel ist gemäß bevorzugter Ausführungsformen ausgewählt aus Lösungsmitteln, die mit dem Geräuschabsorber und den übrigen Reifenbauteilen kompatibel sind bzw. diese nicht aufquellen lassen oder die Bestandteile lösen, wie insbesondere einfache Alkohole, wie Ethanol oder Isopropanol. Diese sind zudem vergleichsweise umweltfreundlich und die meisten wasserunlöslichen Farbmittel sind darin gut lösbar.

Gemäß weiterer Ausführungsformen nicht gemäß der Erfindung ist das Farbmittel als Feststoff, insbesondere in Pulverform, aufgetragen.

Das Pulver kann mittels Luftzerstäubung, beispielsweise mittels Pistole, oder elektrostatisch aufgetragen sein.

Je nach Art des Geräuschabsorbers, kann es vorteilhaft sein vor dem Auftragen des Feststoffes, insbesondere Pulvers, eine Haftschicht aufzubringen.

Gemäß weiterer Ausführungsformen nicht gemäß der Erfindung ist das Farbmittel als Bestandteil einer Folie auf der nach radial einwärts gerichteten Oberfläche des Geräuschabsorbers angebracht. Auch eine Folie lässt sich einfach und materialsparend und insbesondere mit konstanter Schichtdicke auftragen.

Gemäß vorteilhafter Ausführungsformen ist das Farbmittel mit einer Schichtdicke (gemessen in radialer Richtung (rR) senkrecht zur axialen Richtung (aR) des Fahrzeugreifens) von 1 µm (Mikrometer) bis 1000 µm aufgetragen.

Besonders bevorzugt ist eine Schichtdicke von 2 bis 400 µm (Mikrometer), besonders bevorzugt 5 µm bis 100 µm, auf.

Hierdurch kann der Geräuschabsorber möglichst materialsparend farbig markiert werden, ohne dass der Fahrzeugluftreifen eine zu hohe zusätzliche Masse erhält, durch welche sich Rollwiderstandsnachteile ergeben würden.

Der Geräuschabsorber ist gemäß vorteilhafter Ausführungsformen der Erfindung schwarz oder nahezu schwarz. Dies bedeutet, dass der Geräuschabsorber beispielsweise einen Farbton gemäß den RAL-Farbcodes 9004 bis 9007, 9011, 9017 bis 9023 aufweist.

Der Geräuschabsorber kann auch braun oder grau sein.

Bei dem Geräuschabsorber des erfindungsgemäßen Fahrzeugluftreifens kann es sich prinzipiell um jedes Element oder jede Kombination von Elementen handeln, welches bzw. welche in einem Fahrzeugluftreifen auf seiner Innenfläche durch Haftung angebracht werden kann/können und welches/welche die Geräuschemission des Reifens im Fahrbetrieb reduziert/reduzieren, wobei der wenigstens eine Geräuschabsorber wenigstens ein poröses Dämpfungselement ist. Poröse Materialien weisen insbesondere den Vorteil auf, dass sie neben der Geräuschabsorption zugleich ein nicht zu hohes Eigengewicht in den Reifen einbringen, sodass die Rollwiderstandseigenschaften des Reifens nicht unnötig verschlechtert werden.

Das poröse Material, aus dem das Dämpfungselement ausgebildet ist, ist beispielsweise ausgewählt aus der Gruppe enthaltend Polyurethan, insbesondere Polyurethanschäume auf einer Polyetherbasis und/oder Polyurethanschäume auf einer Polyesterbasis mit einer Dichte von 18 bis 300 kg/m³, bevorzugt 30 bis 35 kg/m³, und einer Härte von 6,5 kilo-pascal, Polyester mit einer Dichte von 18 bis 300 kg/m³ bevorzugt 30 bis 35 kg/m³, und einer Härte von 6,5 kilo-pascal, Polyether, sowie beliebige poröse, schallabsorbierende Materialienmischungen, wie beispielsweise Glas- oder Steinwolle, Schlingenware oder Hochflor oder Vliesmaterialien oder Kork. Weitere mögliche poröse Materialien, die sich für die Nutzung als Dämpfungselement eignen, sind beispielsweise ein Melaminharzschaum oder ein Bauschaum.

Besonders bevorzugt enthält der Geräuschabsorber wenigstens ein Polyurethan. Polyurethan ist aufgrund seiner spezifischen Dichte und sonstigen Materialbeschaffenheit sowie Verfügbarkeit besonders geeignet.

Gemäß einer besonders vorteilhaften Ausführungsform ist das poröse Dämpfungselement ein in Umlaufrichtung geschlossener oder geöffneter schallabsorbierender Schaumstoffring. Dieser sorgt für eine gleichmäßige Schallabsorption und der Reifen behält seine Gleichförmigkeit. Der Ring kann dabei in Umlaufrichtung geschlossen sein oder in geöffneter Form als Streifen vorliegen, wobei sich die Enden des Streifens berühren können aber nicht müssen oder aber auch überlappen können.

Der Schaumstoff des Schaumstoffringes ist bevorzugt ein offenzelliger Schaumstoff, da dieser am besten dazu geeignet ist, Schall zu absorbieren.

Besonderes bevorzugt ist der Geräuschabsorber ein geschlossener schallabsorbierender Schaumstoffring aus Polyurethan, dabei besonders bevorzugt ein Polyurethanschaum auf Polyetherbasis.

Derartige Schäume sind dem Fachmann bekannt.

Darüber hinaus können der Geräuschabsorber bzw. die Geräuschabsorber eine beliebige Form aufweisen, wie. z.B. einzelne Elemente in Form von Blöcken, Streifen oder ähnlichem, die beliebig miteinander kombiniert werden können.

Der oder die Geräuschabsorber sind bevorzugt mittels eines Klebemittels haftend an die Reifeninnenseite angebracht. Beispielhafte Klebemittel und Kombinationen von Klebemitteln sind: ein Klebeband und/oder ein silikonbasierter Kleber und/oder ein ZweiKomponenten-Kleber und/oder ein Baukleber und/oder ein Polyurethan-Kleber und/oder ein kautschukbasierter Kleber und/oder ein Reifenreparaturkleber und/oder ein Sekundenkleber und/oder ein Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon.

Derartige Klebemittel weisen insbesondere den Vorteil auf, dass sie in einer derartig geringen Menge aufgetragen werden können, sodass sie nach der Anhaftung ausgehärtet sind. Hierdurch sind sie nach dem Entfernen des Geräuschabsorbers und vor dem Zerkleinern beim Recycling der Reifen nicht klebrig, sodass die Reifen ohne Geräuschabsorber auf bekannte Weise zerkleinert werden können.

Der Geräuschabsorber wird mittels dem Fachmann bekannten Verfahren und Vorrichtungen auf die Reifeninnenseite aufgebracht.

Das Farbmittel wird je nach seiner Art auf die nach radial innen gerichtete Oberfläche des Geräuschabsorbers aufgebracht. Insbesondere kann sie als Suspension, Emulsion oder Lösung aufgetragen werden.

Ein weiterer Gegenstand der Erfindung ist ein Verfahren zur Detektion eines Fahrzeugluftreifens mit wenigstens einem in seinem Inneren an der dem Laufstreifen gegenüberliegenden Innenfläche haftend angebrachten Geräuschabsorber, wobei der Geräuschabsorber eine nach radial einwärts gerichtete Oberfläche aufweist, und auf der nach radial einwärts gerichteten Oberfläche des Geräuschabsorbers wenigstens ein Farbmittel aufgebracht ist zum Unterscheiden von Fahrzeugluftreifen aufweisend einen Geräuschabsorber gegenüber Fahrzeugluftreifen ohne Geräuschabsorber.

Bei dem erfindungsgemäßen Verfahren wird der Geräuschabsorber aufgrund des Farbmittels von einem Operator oder mittels eines Detektors detektiert.

Bei dem Detektor kann es sich um einen Photodetektor oder einen Farbdetektor handeln. Bevorzugt ist ein Farbdetektor, der auf bestimmte Farben, beispielsweise nach dem RAL-System, programmiert ist.

Geeignete Detektoren sind dem Fachmann bekannt und sind üblicherweise computerunterstützt.

Es kann sich ferner um ein Handgerät handeln oder einen Detektor, der in einem automatisierten Verfahren über einen Roboter verwendet wird.

Ein weiterer Gegenstand der Erfindung ist ein Verfahren zum Recycling von Fahrzeugluftreifen mit wenigstens einem in seinem Inneren an der dem Laufstreifen gegenüberliegenden Innenfläche haftend angebrachten Geräuschabsorber, wobei der Geräuschabsorber eine nach radial einwärts gerichtete Oberfläche aufweist, und auf der nach radial einwärts gerichteten Oberfläche des Geräuschabsorbers wenigstens ein Farbmittel aufgebracht ist, das Verfahren umfassend wenigstens die folgenden Verfahrensschritte:
A) Bereitstellung des zu recycelnden Fahrzeugluftreifens;
B) Detektion des Geräuschabsorbers aufgrund des Farbmittels;
C) Abtrennen des Geräuschabsorbers von dem Fahrzeugluftreifen;
D) anschließende Zerkleinerung des Fahrzeugluftreifens ohne Geräuschabsorber.

Gemäß vorteilhafter Ausführungsformen erfolgen die Verfahrensschritte A) bis D) automatisiert.

Ein weiterer Gegenstand der Erfindung ist ein Verfahren zum Recycling von Fahrzeugluftreifen umfassend wenigstens die folgenden Verfahrensschritte:
a) Bereitstellung von zu recycelnden Fahrzeugluftreifen;
b) Durchführung des erfindungsgemäßen Verfahrens zur Detektion eines Fahrzeugluftreifens, um Fahrzeugluftreifen mit Geräuschabsorber von Fahrzeugluftreifen ohne Geräuschabsorber zu unterscheiden;
c) Räumliche Separation von Fahrzeugluftreifen aufweisend ein Geräuschabsorber von Fahrzeugluftreifen ohne Geräuschabsorber;
d) Recycling von Fahrzeugluftreifen ohne Geräuschabsorber umfassend die Zerkleinerung der Fahrzeugluftreifen;
e) Überführung von Fahrzeugluftreifen aufweisend ein Geräuschabsorber zu einem separaten Recycling-Prozess umfassend das Abtrennen des Geräuschabsorber und erst die anschließende Zerkleinerung der Fahrzeugluftreifen.

Gemäß vorteilhafter Ausführungsformen erfolgen die Verfahrensschritte a) bis e) automatisiert. Gemäß einer vorteilhaften Ausführungsform der Erfindung, erfolgt Schritt c) in Verbindung mit Schritt b) automatisiert.

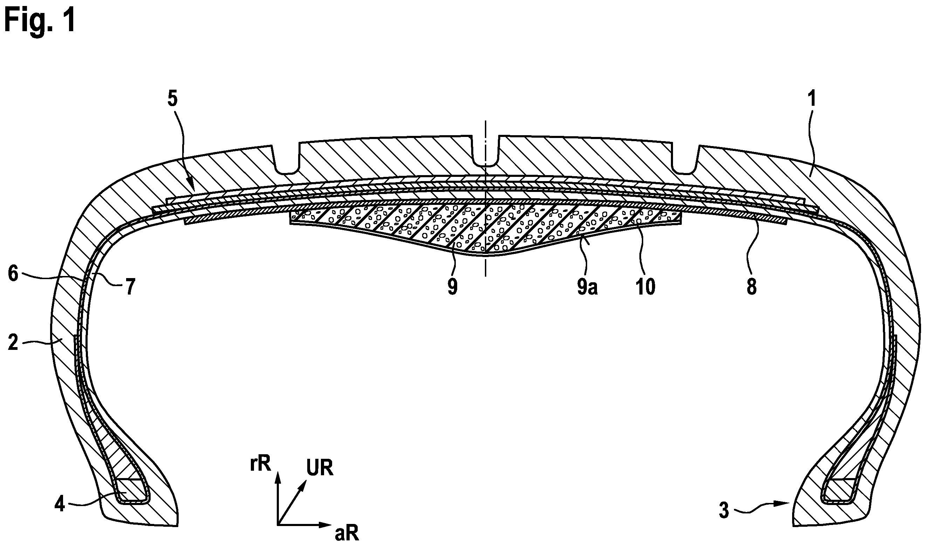

Weitere Einzelheiten der Erfindung werden anhand der Figur 1, die eine schematische Darstellung eines Ausführungsbeispiels ist, näher erläutert.

Im Folgenden soll die Erfindung anhand eines Ausführungsbeispiels näher erläutert werden. Ein Beispiel eines erfindungsgemäßen Fahrzeugluftreifens ist in Figur 1 im Rahmen einer schematischen Darstellung gezeigt.

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein schallabsorbierender Schaumstoffring als Geräuschabsorber 9 mittels eines Klebemittels 8, beispielsweise ein Polyurethan basiertes Klebemittel 8, haftend aufgebracht.

Der schallabsorbierende Schaumstoffring ist bezüglich seiner schallabsorbierenden Eigenschaften auf die Reifenhohlraumfrequenz abgestimmt. Der Geräuschabsorber 9 in Form eines Schaumstoffrings weist beispielsweise hier einen etwa langgestreckt dreieckförmigen, bezüglich des Reifenäquators symmetrischen Querschnitt auf.

Der Schaumstoff des Schaumstoffringes ist ein offenzelliger Schaumstoff, da dieser besonders gut geeignet ist, Schall zu absorbieren. Der Schaumstoff umfasst beispielsweise Polyurethan.

Der Geräuschabsorber 9 weist eine nach radial einwärts gerichtete Oberfläche 9a auf.

Gemäß dem Beispiel in Figur 1 ist auf der nach radial einwärts gerichteten Oberfläche 9a des Geräuschabsorbers 9 wenigstens ein Farbmittel 10 aufgebracht.

Beispielsweise wird das Farbmittel 10 mittels einer Suspension enthaltend das Farbmittel Methylorange aufgetragen. Der Geräuschabsorber 9 ist damit an der nach innen gerichtete Oberfläche 9a somit farbig, nämlich orange. Die Flüssigkeit der Suspension ist beispielsweise Wasser, wobei als Bindemittel ferner Styrol-Acrylat-Copolymer enthalten ist.

Das Farbmittel 10 bedeckt beispielsweise die gesamte (100 %) Oberfläche 9a des Geräuschabsorbers 9.

Der beispielhaft beschriebene Fahrzeugluftreifen kann nun gemäß dem erfindungsgemäßen Verfahren von Fahrzeugluftreifen ohne Geräuschabsorber durch einen Farbdetektor unterschieden werden. Der Farbdetektor ist hierzu insbesondere auf die Detektion von orangenen Farbtönen programmiert.

Hierdurch können erfindungsgemäße Fahrzeugluftreifen mit Geräuschabsorber und Fahrzeugluftreifen ohne Geräuschabsorber in einem erfindungsgemäßen beispielsweise automatisierten Verfahren voneinander unterschieden, räumlich separiert und unterschiedlichen Recycling-Verfahren zugeführt werden. Dabei werden beim erfindungsgemäßen Reifen zunächst in einem zusätzlichen Schritt Geräuschabsorber umfassend Farbmittel vom Reifen entfernt.

### Bezugszeichenliste

### (Teil der Beschreibung)

- 1: Laufstreifen
- 2: Seitenwand
- 3: Wulstbereich
- 4: Wulstkern
- 5: Gürtelverband
- 6: Karkasseinlage
- 7: Innenschicht
- 8: Klebemittel
- 9: Geräuschabsorber
- 9a: nach radial innen gerichtete Oberfläche des Geräuschabsorbers
- 10: Farbmittel

- rR: radiale Richtung
- aR: axiale Richtung
- UR: Umlaufrichtung des Reifens

## Patentansprüche

1. Fahrzeugluftreifen, mit wenigstens einem in seinem Inneren an der dem Laufstreifen (1) gegenüberliegenden Innenfläche haftend angebrachten Geräuschabsorber (9), wobei der Geräuschabsorber (9) eine nach radial einwärts gerichtete Oberfläche (9a) aufweist, wobei der wenigstens eine Geräuschabsorber (9) wenigstens ein poröses Dämpfungselement ist, **dadurch gekennzeichnet, dass** auf der nach radial einwärts gerichteten Oberfläche (9a) des Geräuschabsorbers (9) wenigstens ein Farbmittel (10) über eine flüssige Phase aufgebracht ist.

2. Fahrzeugluftreifen nach Anspruch 1, **dadurch gekennzeichnet, dass** das Farbmittel (10) ausgewählt ist aus anorganischen und organischen Farbmitteln und weiß oder farbig ist.

3. Fahrzeugluftreifen nach einem der vorherigen Ansprüche, **dadurch gekennzeichnet, dass** das Farbmittel (10) wenigstens ein Metallatom oder Metallion aufweist.

4. Fahrzeugluftreifen nach einem der vorherigen Ansprüche, **dadurch gekennzeichnet, dass** das Farbmittel (10) mittels einer Dispersion, insbesondere Suspension oder Emulsion, oder einer Lösung auf die Oberfläche (9a) des Geräuschabsorbers (9) aufgetragen ist, wobei die Dispersion oder die Lösung von 1 bis 80 Gew.-% an Farbmitteln enthält.

5. Fahrzeugluftreifen nach einem der vorherigen Ansprüche, **dadurch gekennzeichnet, dass** das Farbmittel (10) 50 bis 100 % der nach radial einwärts gerichteten Oberfläche (9a) des Geräuschabsorbers (9) bedeckt.

6. Fahrzeugluftreifen nach Anspruch 1, **dadurch gekennzeichnet, dass** das poröse Dämpfungselement ein in Umlaufrichtung geschlossener oder geöffneter schallabsorbierender Schaumstoffring ist.

7. Fahrzeugluftreifen nach einem der vorherigen Ansprüche, **dadurch gekennzeichnet, dass** der Geräuschabsorber wenigstens ein Polyurethan enthält.

8. Verfahren zur Detektion eines Fahrzeugluftreifens mit wenigstens einem in seinem Inneren an der dem Laufstreifen (1) gegenüberliegenden Innenfläche haftend angebrachten Geräuschabsorber (9), wobei der Geräuschabsorber (9) eine nach radial einwärts gerichtete Oberfläche (9a) aufweist, und auf der nach radial einwärts gerichteten Oberfläche (9a) des Geräuschabsorbers (9) wenigstens ein Farbmittel (10) aufgebracht ist, das Verfahren zum Unterscheiden von Fahrzeugluftreifen aufweisend den wenigstens einen Geräuschabsorber (9) gegenüber Fahrzeugluftreifen ohne Geräuschabsorber, wobei der Geräuschabsorber (9) aufgrund des wenigstens einen Farbmittels (10) auf der Oberfläche (9a) von einem Operator oder mittels eines Detektors detektiert wird.

9. Verfahren zum Recycling eines Fahrzeugluftreifens mit wenigstens einem in seinem Inneren an der dem Laufstreifen (1) gegenüberliegenden Innenfläche haftend angebrachten Geräuschabsorber (9), wobei der Geräuschabsorber (9) eine nach radial einwärts gerichtete Oberfläche (9a) aufweist, und auf der nach radial einwärts gerichteten Oberfläche (9a) des Geräuschabsorbers (9) wenigstens ein Farbmittel (10) aufgebracht ist, das Verfahren umfassend wenigstens die folgenden Verfahrensschritte:
A) Bereitstellung des Fahrzeugluftreifens;
B) Detektion des Geräuschabsorbers (9) aufgrund des Farbmittels (10);
C) Abtrennen des Geräuschabsorbers (9) von dem Fahrzeugluftreifen;
D) anschließende Zerkleinerung des Fahrzeugluftreifens ohne Geräuschabsorber.

10. Verfahren zum Recycling von Fahrzeugluftreifen umfassend wenigstens die folgenden Verfahrensschritte:
a) Bereitstellung von zu recycelnden Fahrzeugluftreifen;
b) Durchführung des Verfahrens nach Anspruch 8;
c) Räumliche Separation von Fahrzeugluftreifen aufweisend einen Geräuschabsorber (9) von Fahrzeugluftreifen ohne Geräuschabsorber (9);
d) Recycling von Fahrzeugluftreifen ohne Geräuschabsorber (9) umfassend die Zerkleinerung der Fahrzeugluftreifen;
e) Überführung von Fahrzeugluftreifen aufweisend einen Geräuschabsorber (9) zu einem separaten Recycling-Prozess umfassend das Abtrennen des Geräuschabsorbers (9) und erst die anschließende Zerkleinerung der Fahrzeugluftreifen.

## Claims

1. Pneumatic vehicle tyre with at least one sound absorber (9) adhesively attached in its interior to the inner surface opposite the tread (1), wherein the sound absorber (9) has a radially inward-facing surface (9a), wherein the at least one sound absorber (9) is at least one porous damping element,
**characterized in that** the radially inward-facing surface (9a) of the sound absorber (9) has at least one colorant (10) applied to it via a liquid phase.

2. Pneumatic vehicle tyre according to Claim 1, **characterized in that** the colorant (10) is selected from inorganic and organic colorants and is white or coloured.

3. Pneumatic vehicle tyre according to either of the preceding claims, **characterized in that** the colorant (10) comprises at least one metal atom or metal ion.

4. Pneumatic vehicle tyre according to any of the preceding claims, **characterized in that** the colorant (10) has been applied to the surface (9a) of the sound absorber (9) by means of a dispersion, in particular suspension or emulsion, or a solution, wherein the dispersion or the solution contains from 1% to 80% by weight of colorants.

5. Pneumatic vehicle tyre according to any of the preceding claims, **characterized in that** the colorant (10) covers 50% to 100% of the radially inward-facing surface (9a) of the sound absorber (9).

6. Pneumatic vehicle tyre according to Claim 1, **characterized in that** the porous damping element is a sound-absorbing foam ring closed or open in the circumferential direction.

7. Pneumatic vehicle tyre according to any of the preceding claims, **characterized in that** the sound absorber contains at least one polyurethane.

8. Process for detecting a pneumatic vehicle tyre with at least one sound absorber (9) adhesively attached in its interior to the inner surface opposite the tread (1), wherein the sound absorber (9) has a radially inward-facing surface (9a) and the radially inward-facing surface (9a) of the sound absorber (9) has at least one colorant (10) applied to it, wherein the process is for distinguishing pneumatic vehicle tyres comprising the at least one sound absorber (9) from pneumatic vehicle tyres without a sound absorber, wherein the sound absorber (9) is detected by an operator or using a detector as a result of the at least one colorant (10) on the surface (9a).

9. Process for recycling a pneumatic vehicle tyre with at least one sound absorber (9) adhesively attached in its interior to the inner surface opposite the tread (1), wherein the sound absorber (9) has a radially inward-facing surface (9a) and the radially inward-facing surface (9a) of the sound absorber (9) has at least one colorant (10) applied to it, the process comprising at least the following process steps:
A) providing the pneumatic vehicle tyre;
B) detecting the sound absorber (9) as a result of the colorant (10);
C) separating the sound absorber (9) from the pneumatic vehicle tyre;
D) subsequently comminuting the pneumatic vehicle tyre without the sound absorber.

10. Process for recycling pneumatic vehicle tyres comprising at least the process steps of:
a) providing pneumatic vehicle tyres to be recycled;
b) performing the process according to Claim 8;
c) spatially separating pneumatic vehicle tyres comprising a sound absorber (9) from pneumatic vehicle tyres without a sound absorber (9);
d) recycling pneumatic vehicle tyres without a sound absorber (9) comprising comminution of the pneumatic vehicle tyres;
e) transferring pneumatic vehicle tyres comprising a sound absorber (9) to a separate recycling process comprising separation of the sound absorber (9) and comminution of the pneumatic vehicle tyres only subsequently.

## Revendications

1. Pneumatique de véhicule, avec au moins un absorbeur de bruit (9) fixé adhésivement à l'intérieur de celui-ci, sur la surface intérieure opposée à la bande de roulement (1), l'absorbeur de bruit (9) présentant une surface (9a) orientée radialement vers l'intérieur, l'au moins un absorbeur de bruit (9) étant au moins un élément d'amortissement poreux,
**caractérisé en ce qu'**au moins un colorant (10) est appliqué sur la surface (9a) de l'absorbeur de bruit (9) orientée radialement vers l'intérieur par l'intermédiaire d'une phase liquide.

2. Pneumatique de véhicule selon la revendication 1, **caractérisé en ce que** le colorant (10) est choisi parmi les colorants inorganiques et organiques et est blanc ou coloré.

3. Pneumatique de véhicule selon l'une des revendications précédentes, **caractérisé en ce que** le colorant (10) présente au moins un atome métallique ou un ion métallique.

4. Pneumatique de véhicule selon l'une des revendications précédentes, **caractérisé en ce que** le colorant (10) est appliqué sur la surface (9a) de l'absorbeur de bruit (9) au moyen d'une dispersion, en particulier d'une suspension ou d'une émulsion, ou d'une solution, la dispersion ou la solution contenant de 1 à 80 % en poids de colorants.

5. Pneumatique de véhicule selon l'une des revendications précédentes, **caractérisé en ce que** le colorant (10) recouvre 50 à 100 % de la surface (9a) de l'absorbeur de bruit (9) orientée radialement vers l'intérieur.

6. Pneumatique de véhicule selon la revendication 1, **caractérisé en ce que** l'élément d'amortissement poreux est un anneau en mousse absorbante acoustique fermé ou ouvert dans la direction circonférentielle.

7. Pneumatique de véhicule selon l'une des revendications précédentes, **caractérisé en ce que** l'absorbeur de bruit contient au moins un polyuréthane.

8. Procédé de détection d'un pneumatique de véhicule avec au moins un absorbeur de bruit (9) fixé adhésivement à l'intérieur de celui-ci, sur la surface intérieure opposée à la bande de roulement (1), l'absorbeur de bruit (9) présentant une surface (9a) orientée radialement vers l'intérieur, et au moins un colorant (10) étant appliqué sur la surface (9a) de l'absorbeur de bruit (9) orientée radialement vers l'intérieur, le procédé permettant de distinguer les pneumatiques de véhicule présentant l'au moins un absorbeur de bruit (9) des pneumatiques de véhicule sans absorbeur de bruit, l'absorbeur de bruit (9) étant détecté par un opérateur ou au moyen d'un détecteur en raison de l'au moins un colorant (10) sur la surface (9a).

9. Procédé de recyclage d'un pneumatique de véhicule avec au moins un absorbeur de bruit (9) fixé adhésivement à l'intérieur de celui-ci sur la surface intérieure opposée à la bande de roulement (1), l'absorbeur de bruit (9) présentant une surface (9a) orientée radialement vers l'intérieur, et au moins un colorant (10) étant appliqué sur la surface (9a) de l'absorbeur de bruit (9) orientée radialement vers l'intérieur, le procédé comprenant au moins les étapes de procédé suivantes :
A) la fourniture du pneumatique de véhicule ;
B) la détection de l'absorbeur de bruit (9) en raison du colorant (10) ;
C) la séparation de l'absorbeur de bruit (9) du pneumatique de véhicule ;
D) le broyage ultérieur du pneumatique de véhicule sans absorbeur de bruit.

10. Procédé de recyclage de pneumatiques de véhicules comprenant au moins les étapes de procédé suivantes :
a) la fourniture de pneumatiques de véhicules à recycler ;
b) la mise en œuvre du procédé selon la revendication 8 ;
c) la séparation spatiale de pneumatiques de véhicules présentant un absorbeur de bruit (9) de pneumatiques de véhicules sans absorbeur de bruit (9) ;
d) le recyclage de pneumatiques de véhicules sans absorbeur de bruit (9), comprenant le broyage des pneumatiques de véhicules ;
e) le transfert de pneumatiques de véhicules présentant un absorbeur de bruit (9) vers un processus de recyclage séparé comprenant la séparation de l'absorbeur de bruit (9) et le broyage ultérieur des pneumatiques de véhicules.
